# EUROPÄISCHE PATENTANMELDUNG

(11) **EP 1 643 603 A1**
(43) Veröffentlichungstag der Anmeldung: **05.04.2006**
(21) Anmeldenummer: 04023152.4
(22) Anmeldetag: 29.09.2004
(51) Int. Cl.: H01S 3/0941, H01S 3/042, H01S 3/23, H01S 3/02

(54) **Lasersystem mit Festkörperlaserköpfen**

(71) Anmelder: WaveLight Laser Technologie AG, 91058 Erlangen (DE)
(72) Erfinder: Kappel, Christoph, Dr., 90762 Fürth (DE); Donitzky, Christof, 90542 Eckental (DE); Vogler, Klaus, Dr., 90542 Eckental (DE)
(74) Vertreter: von Hellfeld, Axel

(57) **Zusammenfassung**

Ein Lasersystem (10) weist eine Diode (12) zum optischen Pumpen von Festkörperlaserköpfen (20, 22, 24) auf, wobei Einrichtungen (30, 32, 34) vorgesehen sind zum Aufnehmen von verschiedenen Festkörperläserköpfen derart, dass diese jeweils mit der genannten Diode pumpbar sind. Ein anderes Lasersystem ist dadurch gekennzeichnet, dass eine gemeinsame Kühleinheit für zwei oder mehr Festkörperlaserköpfe vorgesehen ist. Eine Steuerung für ein solches Lasersystem enthält Steuerdaten zum Betrieb von zwei oder mehr Festkörperlaserköpfen.

## Beschreibung

Die Erfindung betrifft ein Lasersystem mit zumindest einer Diode zum optischen Pumpen von zumindest einem Festkörperlaserkopf.

Diodengepumpte Festkörperlaser finden zunehmend Anwendung. Dabei wird das Festkörper-Lasermedium mit der Strahlung einer Diode optisch gepumpt, insbesondere einer Laserdiode. Wesentliche Bestandteile eines solchen diodengepumpten Festkörperlasers sind der Laserkopf, die Pumpdiode, ein Netzteil für die Strom- und Spannungsversorgung, eine Kühlung und eine Steuerung für die genannten Komponenten, zum Beispiel in Form eines Rechners mit einer entsprechenden Eingabeeinrichtung.

Unter dem "Laserkopf" wird dabei der Laserresonator einschließlich dessen Komponenten verstanden.

Bei einer Vielzahl von Anwendungen von Laserstrahlung sind vor Ort Laser erforderlich mit unterschiedlichen Ausgangswellenlängen. Um solchen Anforderungen Rechnung zu tragen, kennt der Stand der Technik bereits Geräte, bei denen mehrere vollständige Lasersysteme in einem (einzigen) Gerät installiert sind. Damit wird der Raumbedarf verringert und die Handhabung erleichtert. Zum Beispiel bietet die Firma LUMENIS ein Gerät an, in dem drei verschiedene, parallel installierte Laser wahlweise zum Einsatz kommen. Aufgrund der Installation von drei kompletten Lasersystemen ist das Gerät insgesamt entsprechend teuer und seine Mobilität und Variabilität sind stark eingeschränkt.

Insbesondere in der medizinischen Praxis, d.h. in Hospitälern, Arztpraxen oder Praxiszentren, gibt es einen wachsenden Bedarf, verschiedene Laser mit unterschiedlichen Wellenlängen wahlweise an ein und demselben Ort zur Verfügung zu haben.

Aber auch im Bereich der industriellen Materialbearbeitung besteht zunehmend Bedarf an einem kostengünstigen, kompakten und vielseitigen Lasersystem mit der Möglichkeit, Laserstrahlen unterschiedlicher Wellenlängen einzusetzen.

Sollen gemäß dem Stand der Technik mit einer gegebenen Vorrichtung Laserstrahlen mit unterschiedlichen Wellenlängen und/oder anderen Leistungsdaten erzeugt werden, so waren hierfür am Einsatzort des medizinisch oder industriell eingesetzten Lasers jeweils im wesentlichen komplette, d.h. autarke Lasersysteme erforderlich. Bei Einsatz von diodengepumpten Festkörperlasern also Systeme bestehend jeweils aus zumindest dem Laserkopf, der Pumpdiode, der Kühleinheit und elektrischen Versorgungs- und Steuereinheiten.

Der Erfindung liegt die Aufgabe zugrunde, ein Lasersystem bereitzustellen, mit dem mit wenig Aufwand, insbesondere hinsichtlich Herstellung, Raumbedarf, Bedienung, und Wartung, wahlweise unterschiedliche Laserstrahlungen erzeugbar sind.

Hierzu stellt die Erfindung ein Lasersystem bereit mit zumindest einer Diode zum optischen Pumpen von zumindest einem Festkörperlaserkopf, wobei Einrichtungen vorgesehen sind zum Aufnehmen von verschiedenen Festkörperlaserköpfen derart, dass diese jeweils mit der genannten Diode pumpbar sind.

Zunächst hat ein solches Lasersystem den Vorteil, dass mit ein und derselben Diode verschiedene Festkörperlaserköpfe, also insbesondere Festkörperlaserköpfe, die Strahlung mit unterschiedlichen Wellenlängen emittieren, gepumpt werden können. In einer einzigen Vorrichtung (mit einem einzigen Gehäuse) ist eine Diode mit den zugehörigen Komponenten, wie insbesondere einer Kühlung, angeordnet und es sind Aufnahmen vorgesehen, um in dieser Vorrichtung verschiedene Festkörperlaserköpfe so zu installieren, dass diese direkt, ohne zusätzlichen Aufwand an weiteren Komponenten betrieben werden können.

Gemäß einer ersten Ausführungsform können gleichzeitig zwei oder mehr unterschiedliche Festkörperlaserköpfe in dem Lasersystem installiert werden. Dabei sind dann Einrichtungen vorgesehen zum wahlweisen Umlenken der von der Diode emittierten Strahlung zu einem oder mehreren der Mehrzahl von Festkörperlaserköpfen. Gemäß einer bevorzugten Ausgestaltung dieser Variante der Erfindung ist eine Kühleinheit für die (vorzugsweise einzige) Diode und eine weitere Kühleinheit für die Laserköpfe vorgesehen, sodass insgesamt vorzugsweise nur zwei Kühleinheiten erforderlich sind, auch wenn, außer der Diode, zwei oder mehr Festkörperlaserköpfe installierbar sind.

Gemäß einer bevorzugten Ausgestaltung dieser Ausführungsform der Erfindung ist eine Einrichtung vorgesehen zum wahlweisen übertragen von Strahlung, die von einem Laserkopf aus der Mehrzahl von Festkörperlaserköpfen emittiert wird.

Gemäß einer anderen Ausführungsform der Erfindung ist vorgesehen, dass die Einrichtung zum Aufnehmen von verschiedenen Festkörperlaserköpfen Mittel aufweist, um verschiedene Festkörperlaserköpfe an die (vorzugsweise einzige) Diode des Lasersystems anzuschließen, d.h. von dieser Diode optisch pumpen zu lassen. Bei dieser Variante der Erfindung hat also das in sich geschlossene, autarke Lasersystem eine Aufnahme, in die direkt unterschiedliche Festkörperlaserköpfe mit unterschiedlichen Emissionseigenschaften einsetzbar sind. Der Benutzer braucht zur Änderung der Laseremission nur einen anderen Festkörperlaserkopf einzusetzen. Ansonsten bleiben die übrigen Komponenten des Systems im wesentlichen unverändert.

Dieser Einsatz verschiedener Festkörperlaserköpfe mit einer einzigen Pumpdiode wird dadurch ermöglicht, dass unterschiedliche Festkörperlaserköpfe zur Verfügung stehen, die mit derselben Pumpdiode optisch gepumpt werden können, wobei allenfalls die Steuerdaten, mit denen die Pumpdiode betrieben wird, an den Laserkopf anzupassen sind, also nur die elektrische Versorgung der Pumpdiode entsprechend einzustellen ist, ohne Abänderung der Versorgungskomponenten als solchen.

Gemäß einer anderen Variante der Erfindung ist ein Lasersystem vorgesehen mit zwei oder mehr diodengepumpten Festkörperlaserköpfen, wobei eine (einzige) gemeinsame Kühleinheit für die zwei oder mehr Festkörperlaserköpfe eingesetzt wird.

Die Erfindung beinhaltet auch eine elektronische Steuerung für ein Lasersystem mit zwei oder mehr diodengepumpten Festkörperlaserköpfen, wobei die Steuerung in ihrem Speicher oder in fest verdrahteter Form Steuerdaten zum Betrieb der zwei oder mehr Festkörperlaserköpfe enthält. Mit einer solchen Steuerung braucht ein Benutzer bei einem der vorstehend beschriebenen Lasersysteme nur einen Festkörperlaserkopf auszutauschen und/oder in der Vorrichtung hinzuzufügen und kann sogleich, ohne weiteren Aufwand hinsichtlich der Hardware und der Software die Steuerung und Einstellung für alle überhaupt für das Lasersystem in Betracht kommenden Festkörperlaserköpfe durchführen.

Die Erfindung stellt also ein modular aufgebautes, diodengepumptes Festkörperlasersystem bereit, bei dem mit vergleichsweise geringem apparativen Aufwand direkt vor Ort beim Anwender, zum Beispiel in dem Hospital oder der medizinischen Praxis oder auch am Ort der industriellen Fertigung, verschiedene Festkörperlaserköpfe und/oder eine unterschiedliche Anzahl von Festkörperlaserköpfen in einfacher Weise einsetzbar sind. Dabei eignen sich alle oben beschriebenen Lasersysteme insbesondere für eine sukzessive Nachrüstung mit weiteren Festkörperlaserköpfen, d.h. ein Nutzer braucht zunächst nur einen oder eine relativ geringe Anzahl von Festkörperlaserköpfen zu erwerben und kann dann mit demselben Lasersystem auch weitere, davon verschiedene Festkörperlaserköpfe betreiben, die er später dazu erwirbt.

Die Erfindung ist sowohl mit kontinuierlich betriebenen als auch mit gepulsten oder getakteten Lasersystemen realisierbar.

Nachfolgend werden anhand der Zeichnung verschiedene Ausführungsformen der Erfindung beschrieben. Es zeigt:
- Figur 1: ein Lasersystem, in dem wahlweise mehrere Festkörperlaserköpfe betrieben werden können;
- Figur 2: ein Lasersystem, bei dem in einfacher Weise ein Austausch verschiedener Festkörperlaserköpfe durchführbar ist;
- Figur 3: ein Lasersystem mit einfachem Aufbau hinsichtlich insbesondere der Kühlung; und
- Figur 4: ein weiteres Ausführungsbeispiel eines Lasersystems.

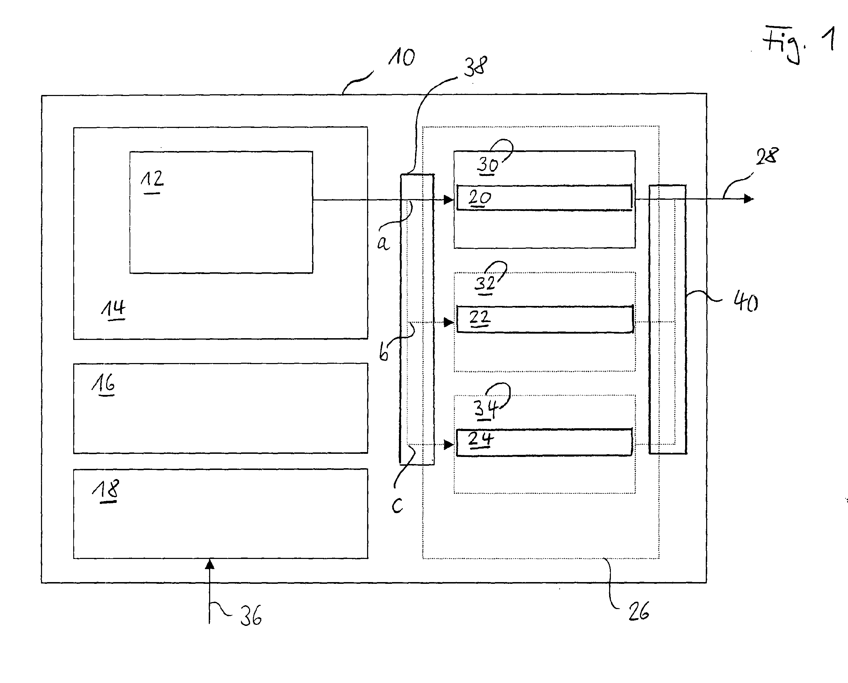

Gemäß Figur 1 weist das Lasersystem 10 ein geschlossenes Gehäuse auf, in dem alle dargestellten und nachfolgend beschriebenen Komponenten entweder fest installiert oder austauschbar installierbar sind.

Eine Diode 12 dient zum optischen Pumpen von Festkörperlaserköpfen. Bei der Diode 12 handelt es sich zum Beispiel um einen Diodenlaser. Eine Kühleinrichtung 14 dient zum Kühlen der Diode 12. Ein Netzteil 16 dient der Stromversorgung aller Komponenten des Lasersystems 10. Eine Steuerung 18, zum Beispiel in Form eines Rechners mit einer zugehörigen Eingabeeinrichtung, dient der Steuerung des Betriebs von Festkörperlaserköpfen, die in dem System 10 installiert sind.

Beim Ausführungsbeispiel gemäß Figur 1 sind drei Festkörperlaserköpfe 20, 22, 24 in dem Lasersystem 10 fest installiert, wobei allerdings eine Nachrüstbarkeit dahingehend möglich ist, dass ein Anwender zunächst nur das System zusammen mit einem oder einer geringen Anzahl von Festkörperlaserköpfen erwirbt, wobei dann im System 10 noch Installationsplätze für weitere Festkörperlaserköpfe vorgesehen sind, die später dazuerworben werden können.

Für jeden Festkörperlaserkopf ist jeweils eine Aufnahme 30, 32, 34 vorgesehen, in die der Festkörperlaserkopf mechanisch und elektrisch passt, d.h. in einfacher Weise einsetzbar ist.

Die Festkörperlaserköpfe 20, 22, 24 erzeugen wahlweise Laserstrahlung unterschiedlicher Wellenlänge und können vom Benutzer über eine Eingabeeinrichtung 36 (Schalter, Tastatur, Anzeigeeinrichtung oder dergleichen) ausgewählt und hinsichtlich der Leistungsdaten eingestellt werden. Die ausgewählte Laserstrahlung verlässt das Lasersystem 10 über einen Ausgang 28.

Je nach dem für den Betrieb ausgewählten Festkörperlaserkopf 20, 22 oder 24, wird die von der Diode 12 erzeugte Pumpstrahlung über eine Umlenkeinrichtung 38 in den ausgewählten Festkörperlaserkopf zum optischen Pumpen des Lasers eingekoppelt.

Die Umlenkeinrichtung 38 kann unterschiedliche Ausgestaltungen haben. In einer sehr einfachen Variante kann mit einem optischen Faserleiter die von der Diode 12 emittierte Pumpstrahlung in der Art einer Steckverbindung vom Benutzer jeweils zum ausgewählten Festkörperlaserkopf geführt werden. Dies ist in Figur 1 durch die Pfeile zu den Laserköpfen angedeutet. Gemäß einer fortgeschritteneren Lösung kann für diese variable Kopplung der Pumpstrahlung zum Beispiel ein verstellbares Spiegelsystem vorgesehen sein. So können beispielsweise an den Stellen a, b und c gemäß Figur 1 verstellbare Spiegel angeordnet werden, um die Strahlung in der gewünschten Weise zu den Laserköpfen zu führen. Soll beispielsweise der Festkörperlaserkopf 20 gepumpt werden, kann der Spiegel an der Stelle a aus dem Strahlengang der von der Diode 12 kommenden Strahlung entfernt werden, sodass die Pumpstrahlung direkt in diesen Laserkopf gelangt. Soll hingegen der Laserkopf 22 gepumpt werden, können an den Stellen a und b Spiegel in den Strahlengang geschoben werden, sodass die Strahlung in den Laserkopf 22 eingekoppelt wird. Entsprechend sind für ein optisches Pumpen des Festkörperlaserkopfes 24 Spiegel an den Stellen a und c erforderlich. Die Spiegel können in einfacher Weise elektro-mechanisch betätigt werden.

Gemäß einer anderen Ausgestaltung der Umlenkeinrichtung 38 kann ein mechanisch verschiebbarer Schlitten mit Spiegeln vorgesehen werden, der in einer einfachen Linearbewegung entlang der Längsachse der Umlenkeinrichtung 38 gemäß Figur 1 verschiebbar ist und dabei die jeweils gewünschte Spiegelanordnung in den Strahlengang bringt.

Mittels der Übertragungseinrichtung 40 kann dann die Strahlung des ausgewählten Festkörperlaserkopfes zum Ausgang 28 umgelenkt werden. Für die Übertragungseinrichtung 40 gemäß Figur 1 kommen analog die oben anhand der Umlenkeinrichtung 38 beschriebenen optischen und mechanischen Varianten in Betracht. Der Ausgang 28 führt zu der medizinischen oder industriellen Anwendung der erzeugten und ausgewählten Laserstrahlung. Denkbar sind auch drei getrennte Ausgänge, an die jeweils die Anwendung wahlweise angeschlossen werden kann.

Mit dem System gemäß Figur 1 ist es möglich, mit lediglich einem Diodenmodul mehrere Festkörperlaserköpfe zu betreiben.

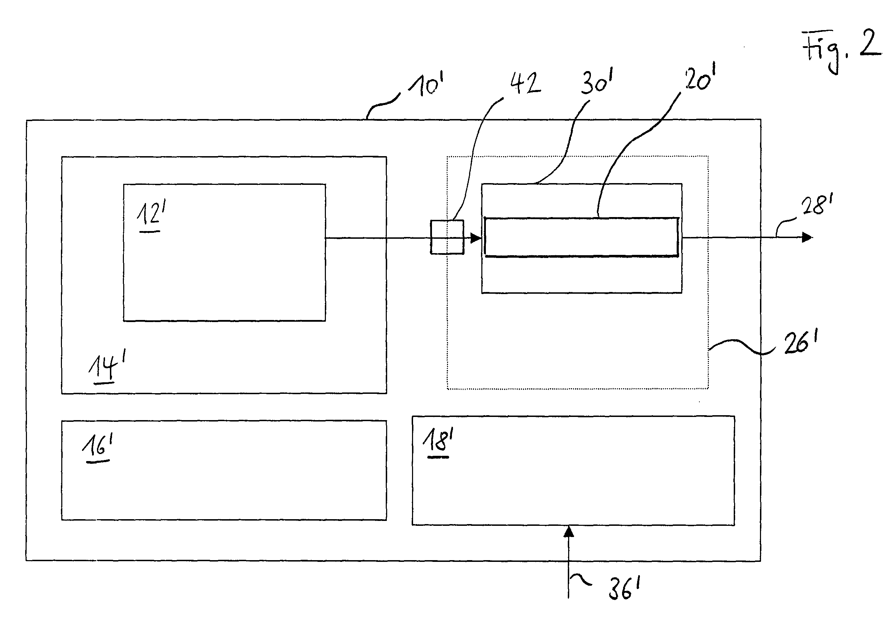

Figur 2 zeigt ein abgewandeltes Ausführungsbeispiel. In den Figuren sind einander funktionsgleiche oder -ähnliche Komponenten mit den gleichen Bezugsziffern versehen, gegebenenfalls um einen Strich, zwei Striche oder einen Buchstaben ergänzt.

Beim Lasersystem 10' gemäß Figur 2 ist nur eine Aufnahme 30' für einen (einzigen) Festkörperlaserkopf 20' vorgesehen. Allerdings ist diese Aufnahme 30' so ausgelegt, dass verschiedene Laserköpfe 20' mit unterschiedlichen Wellenlängen in einfacher Weise elektrisch und mechanisch in die Aufnahme 30' einsetzbar sind. Auch bei dem Lasersystem 10' gemäß Figur 2 werden verschiedene Festkörperlaserköpfe mit derselben Diode 12' gepumpt und die übrigen Komponenten, wie die Steuerung, die Kühlung etc. brauchen bei einem Wechsel des Festkörperlaserkopfes nicht ausgetauscht zu werden. Die verschiedenen Festkörperlaserköpfe 20' werden über ein Mittel 42 mit der Pumpdiode 12' gekoppelt, wobei das Mittel 42 zum Anschließen der Pumpstrahlung jeweils so ausgelegt ist, dass die in Frage kommenden unterschiedlichen Festkörperlaserköpfe ohne weiterhin erforderliche zusätzliche Bauteile angeschlossen werden können. Sind die Festkörperlaserköpfe elektrisch und mechanisch, insbesondere hinsichtlich ihrer äußeren Abmessungen, identisch, dann können Sie in einfacher Weise einfach in die Aufnahme 30' eingeschoben werden, ohne dass es einer Anpassung der optischen Übertragung mit Hilfe des Anpassungsmittels 42 bedarf.

Mit den vorstehend anhand der Figuren 1 und 2 beschriebenen Lasersystemen 10 bzw. 10' können eine Vielzahl von Wellenlängen erzeugt werden, nicht nur durch den beschriebenen Austausch der Laserköpfe, sondern auch durch die Auswahl der unterschiedlichen Frequenzvervielfachten (also der zweiten, dritten, oder vierten Harmonischen der Grundwellenlänge).

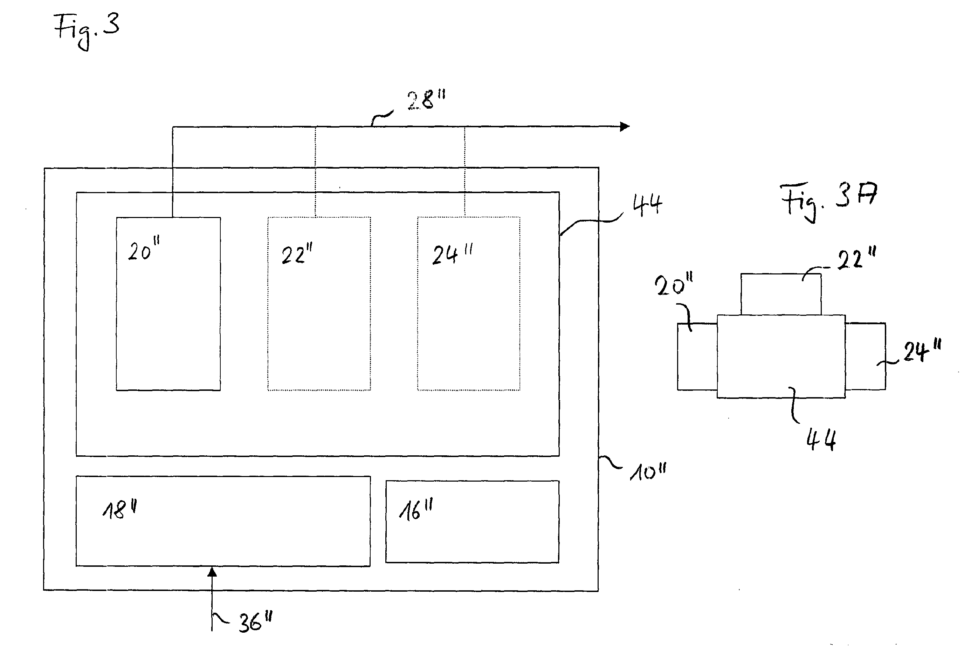

Figur 3 zeigt eine weitere Ausführungsform eines Lasersystems 10", wobei mehrere fest installierte oder gemäß Figur 2 austauschbare Festkörperlaserköpfe 20", 22", 24" vorgesehen sind, bei diesem Ausführungsbeispiel allerdings jeweils mit einer ihnen zugeordneten individuellen Pumpdiode, die in den Laserkopf integriert ist. Jeder der Laserköpfe 20', 22', 24' weist also eine "eigene" Pumpdiode auf. Dies ist im Stand der Technik bekannt, zum Beispiel bei sogenannten Scheibenlasern. Beim Ausführungsbeispiel nach Figur 3 wird aber eine Reduzierung des gerätetechnischen Aufwandes dadurch erreicht, dass ein einziger Kühlkörper 44 (Figur 3A) zugleich die drei Festkörperlaserköpfe 20", 22" und 24" kühlt. Jeder der genannten Festkörperlaserköpfe hat jeweils eine eigene Diode zum Pumpen. Auch diese Dioden werden von der Kühleinheit 44 mitgekühlt.

Bei dieser Ausführungsform der Erfindung gemäß Figur 3 sind auch Festkörperlaserköpfe einsetzbar, die von Pumpdioden mit verschiedenen Wellenlängen angeregt werden, sodass sich eine erweiterte Anzahl von in Betracht kommenden Wellenlängen ergibt, wobei jeweils derselbe Kühlkörper 44 dazu dient, die eingesetzten Pumpdioden zu kühlen.

Die Verbindung der austauschbaren Festkörperlaserköpfe zum Kühlkörper bzw. Kühlsystem kann zum Beispiel über die direkte Kontaktierung auf dem Kühlkörper erfolgen oder auch durch Anschluss an einen Kühlwasserkreislauf. Die Kühltechniken sind als solche dem Fachmann bekannt, zum Beispiel Peltier oder Wasserkühler. Dies hängt vom verwendeten Festkörperlaserkopf und auch von den verwendeten Pumpdioden ab.

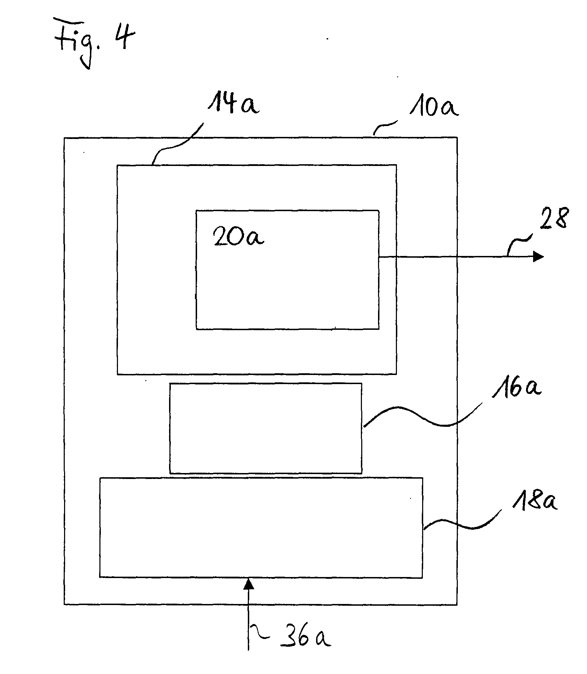

Figur 4 zeigt ein weiteres Ausführungsbeispiel eines Lasersystems 10a mit einer Kühleinheit 14a, die sowohl einen Festkörperlaserkopf 20a kühlt, als auch eine Pumpdiode zum Pumpen dieses Festkörperlaserkopfes 20a. Dabei ist der Festkörperlaserkopf 20a austauschbar, d.h. es können unterschiedliche Festkörperlaserköpfe mit unterschiedlichen emittierten Wellenlängen in das Gehäuse 10a und die Kühlung 14a eingesetzt werden, wobei jeder eingesetzte Festkörperlaserkopf seine "eigene" Pumpdiode aufweist, die von der Kühleinheit 14a gekühlt wird.

Die Steuerung 18, 18', 18" gemäß den unterschiedlichen Ausführungsformen ist bevorzugt so ausgestaltet, dass sie bereits herstellerseitig die Steuerdaten der in Betracht kommenden Festkörperlaserköpfe, die in dem System jeweils installierbar sind, enthält. Es kann auch eine Nachrüstbarkeit dieser Steuerdaten vorgesehen werden, zum Beispiel in Form eines Datenträger oder auch in Form einer Datenübertragung. Der Benutzer kann dann in einfacher Weise entsprechend dem ausgewählten Festkörperlaserkopf auch die zugehörigen Steuerdaten aufrufen und damit den Laserkopf betreiben. Auch können in den Steuerdaten bereits Informationen abgelegt sein, mit denen auch die übrigen Komponenten des Systems, entsprechend dem ausgewählten Laserkopf, gesteuert werden, so zum Beispiel der Diodenstrom etc., ohne dass der Benutzer hierauf zu achten hätte. Dies gilt auch für weitere zu steuernde Parameter, wie zum Beispiel die Kühlung, die Temperaturstabilisierung etc.

## Patentansprüche

1. Lasersystem mit zumindest einer Diode (12; 12'; 12a, 12b, 12c) zum optischen Pumpen von zumindest einem Festkörperlaserkopf (20, 22, 24; 20'; 20", 22", 24"), **gekennzeichnet durch** Einrichtungen (30, 32, 34; 30') zum Aufnehmen von verschiedenen Festkörperlaserköpfen (20, 22, 24; 20'; 20", 22", 24") derart, dass diese jeweils mit der genannten Diode (12; 12'; 12a, 12b, 12c) pumpbar sind.

2. Lasersystem nach Anspruch 1, **gekennzeichnet durch** Einrichtungen (30, 32, 34) zum Aufnehmen von zwei oder mehr Festkörperlaserköpfen (20, 22, 24).

3. Lasersystem nach einem der Ansprüche 1 oder 2, **gekennzeichnet durch** eine Einrichtung (38) zum wahlweisen Umlenken von von der Diode (12) emittierter Strahlung zu einem Festkörperlaserkopf aus einer Mehrzahl von Festkörperlaserköpfen (20, 22, 24).

4. Lasersystem nach einem der vorhergehenden Ansprüche, **dadurch gekennzeichnet, dass** jeweils eine Kühleinheit (14) für die Diode (12) und eine Kühleinheit (26) für den Festkörperlaserkopf bzw. die Festkörperlaserköpfe vorgesehen ist.

5. Lasersystem nach einem der vorhergehenden Ansprüche, **gekennzeichnet durch** eine Einrichtung (40) zum wahlweisen Übertragen von Strahlung, die von einem aus einer Mehrzahl von Festkörperlaserköpfen (20, 22, 24) emittiert wird.

6. Lasersystem nach Anspruch 1, **dadurch gekennzeichnet, dass** die Einrichtung (30') zum Aufnehmen von verschiedenen Festkörperlaserköpfen (20') Mittel (42) aufweist, um verschiedene Festkörperlaserköpfe an die Diode (12') anzuschliessen.

7. Lasersystem mit zwei oder mehr diodengepumpten Festkörperlaserköpfen (20", 22'', 24''), **dadurch gekennzeichnet, dass** eine gemeinsame Kühleinheit (44) für die zwei oder mehr Festkörperlaserköpfe vorgesehen ist.

8. Lasersystem mit einem Gehäuse (10a) und einer Kühleinheit (14a) derart, dass unterschiedliche Festkörperlaserköpfe (20a) mit jeweils einer Pumpdiode in das Gehäuse (10a) derart einsetzbar sind, dass die Kühleinheit (14a) die eingesetzten Festkörperlaserköpfe und Pumpdioden kühlt.

9. Steuerung für ein Lasersystem mit zwei oder mehr diodengepumpten Festkörperlaserköpfen (20, 22, 24), **dadurch gekennzeichnet, dass** die Steuerung Steuerdaten zum Betrieb der zwei oder mehr Festkörperlaserköpfe enthält.
